# EUROPÄISCHE PATENTSCHRIFT

(11) **EP 3 117 183 B1**
(45) Veröffentlichungstag und Bekanntmachung des Hinweises auf die Patenterteilung: **13.11.2019**
(21) Anmeldenummer: 15709840.1
(22) Anmeldetag: 06.03.2015
(51) Int. Cl.: G01C 21/16, G01S 19/47

(54) **VERFAHREN UND VORRICHTUNG ZUM BESTIMMEN VON NAVIGATIONSDATEN**
METHOD AND DEVICE FOR DETERMINING NAVIGATION DATA
MÉTHODE ET DISPOSITIF POUR DÉTERMINER DES DONNÉES DE NAVIGATION

(30) Priorität: 10.03.2014 DE 102014004060
(43) Veröffentlichungstag der Anmeldung: 18.01.2017
(73) Patentinhaber: Northrop Grumman LITEF GmbH, 79115 Freiburg (DE)
(72) Erfinder: HÜLLENKREMER, Manfred, 79112 Freiburg (DE); KRINGS, Manfred, 79232 March (DE)
(74) Vertreter: Müller Hoffmann & Partner
(86) Internationale Anmeldenummer: PCT/EP2015/000507
(87) Internationale Veröffentlichungsnummer: WO 2015/135638

(56) Entgegenhaltungen:
- EP-A2- 2 081 044
- US-A1- 2001 020 216
- US-A1- 2001 020 216
- US-B1- 6 944 542
- US-B1- 6 944 542

## Beschreibung

Die Erfindung betrifft ein Verfahren zum Bestimmen von Navigationsdaten und eine Vorrichtung zum Ausführen des Verfahrens.

Zum Navigieren, insbesondere in der Luftfahrt werden erhöhte Anforderungen an die Integrität von Kurs- und Lagewinkelinformationen gestellt. Diese Integrität wird durch zuverlässige Kurslagereferenzsysteme und durch redundante Ausrüstung wie Mehrfachinstallationen und Notinstrumente erreicht.

Zur Steigerung der Genauigkeit werden hybride Systeme eingesetzt, die eine inertiale Navigationsplattform und ein Satellitennavigationssystem über ein Kalmanfilter koppeln. Beispiele hierfür liefern die Dokumente US 6 944 542 B1 und US 2001/020216 A1.

Neben der Genauigkeit einer bestimmten Größe spielt auch deren Integrität eine wichtige Rolle in der Luftfahrt. Die Integrität des Satellitennavigationssystems ist aber alleine nicht für alle Anwendungen in der Luftfahrt ausreichend. Dies trifft besonders dann zu, wenn das Satellitennavigationssystem Einfluss auf die Lagebestimmung hat. Wird das Satellitennavigationssystem gleichermaßen in den redundanten Ausrüstungen verwendet, bestimmt die Integrität des Satellitennavigationssystems maßgeblich die Integrität des Gesamtnavigationssystems. Die Integrität von Satellitennavigationssystemen ist jedoch nach unten begrenzt. Somit ist auch die Integrität der hybriden Systeme in Einzel- oder Mehrfachausführung begrenzt.

Als Integrität wird die Wahrscheinlichkeit bezeichnet, mit der der Fehler einer Messgröße, wie z.B. der Position, eine vorgegebene Grenze nicht überschreitet.

Zum Beispiel kann man die Integrität als maximal zulässige Fehlerrate gerechnet auf eine Bezugseinheit bestimmen. Als Fehlmessung gilt hierbei eine Messung, deren Messwert um mehr als einen Toleranzwert von einem Referenzwert abweicht. Der Referenzwert kann hierbei der tatsächliche Wert oder ein basierend auf vorhergehenden Messungen geschätzter Wert der gemessenen Größe sein.

Die Bezugseinheit, gegenüber der die Fehlerrate bestimmt wird, kann jede Einheit sein, die sich zur Messung von Positions- und Lageänderungen eignet. Die Bezugseinheit kann zum Beispiel eine Zeiteinheit sein, wie z.B. Minuten, Stunden oder Tage. Dann wird die Fehlerrate ermittelt, indem die Anzahl der Überschreitungen der vorgegebenen Fehlergrenze (also die Anzahl der Fehlmessungen) durch die gewählte Zeiteinheit geteilt wird. Die Fehlerrate wird dann zum Beispiel als Anzahl der Fehler pro Stunde angegeben. Die Bezugseinheit kann auch eine Längeneinheit sein, wie z.B. Meter, Kilometer, Seemeilen. Die Integrität kann dann zum Beispiel auch als Anzahl der Fehler (d.h. Anzahl der Überschreitungen der Fehlergrenze) pro Seemeile angegeben. Die Bezugseinheit kann auch eine Gradangabe bezüglich der Länge und Breite auf der Erdoberfläche sein, wie z.B. Grad, Winkelminuten oder Winkelsekunden. Die Integrität wird dann zum Beispiel als Anzahl der Fehler pro Winkelminute angegeben.

Eine hohe Integrität liegt dann vor, wenn die Anzahl der Fehlmessungen sehr gering wird, zum Beispiel wenn Fehlmessungen bedeutend seltener als einmal in tausend Jahren auftreten (dies entspricht einer Integrität von ca. 10⁻⁷/ Stunde).

Für die Luft- und Seefahrt insbesondere von Bedeutung ist die Integrität von Roll- und Nickwinkel (Lagewinkel) sowie die des Kurswinkels, da diese die Orientierung von Wasser- oder Luftfahrzeugen im Raum beschreiben. Wird zum Beispiel der Rollwinkel auf einem Wasserfahrzeug zu groß, droht es zu kentern. Zudem lässt sich aus dem Rollwinkel bei Kurvenfahrt der Radius der gefahrenen (oder geflogenen) Kurve abschätzen. Wird der Nickwinkel beim Landeanflug eines Luftfahrzeuges falsch bestimmt, ist eine sichere Landung gefährdet.

Eine Fehlmessung der Kurs- oder Lagewinkel liegt dann vor, wenn ein Messwert eines der Winkel um mehr als den Toleranzwert von dem entsprechenden Referenzwert abweicht. Der Referenzwert kann der tatsächliche Wert des Winkels oder ein aus den bisher gemessenen Daten interpolierter Wert des Winkels sein.

Je nach Position und Manöver des Fahrzeugs können die Anforderungen an die Häufigkeit von erlaubten Fehlmessungen und damit an die Integrität unterschiedlich hoch sein. Für ein Wasserfahrzeug in ruhigem Fahrwasser auf hoher See, ein mit dem Wasserfahrzeug fest verbundenes oder auf der Erde stehendes Luftfahrzeug oder ein sich in großer Höhe befindliches Luftfahrzeug sind die Anforderungen an die Integrität geringer als bei einem Wasserfahrzeug in schwerer See oder Küstennähe oder einem Luftfahrzeug beim Landeanflug.

Als typische Toleranzwerte in der Luftfahrt gelten 4° bis 5° für die Abweichung von Lagewinkelmesswerten von den entsprechenden Referenzwerten und von etwa 10° für die Abweichung von Kurswinkelmesswerten von den entsprechenden Referenzwerten. Mit diesen Toleranzwerten sollten Navigationssysteme von Luftfahrzeugen mit hoher Integrität gewährleisten, dass die Wahrscheinlichkeit der Überschreitung des Toleranzwertes für die Lagewinkelmessung kleiner als 10⁻⁹ pro Stunde (d.h. weniger als 10⁻⁹ Lagewinkelfehlmessungen pro Stunde oder ca. eine Fehlmessung in 100.000 Jahren) bzw. für Kurswinkelmessungen kleiner als 10⁻⁷ pro Stunde (d.h. weniger als 10⁻⁷ Kurswinkelfehlmessungen pro Stunde oder ca. eine Fehlmessung in 1.000 Jahren) ist.

Um eine hohe Genauigkeit der Winkelmessungen zu garantieren, werden in konventionellen Systemen hybride Navigationsplattformen eingesetzt, die inertiale Navigationsplattformen mit Satellitennavigationssystemen über Kalman-Filter koppeln.

Messwerte der inertialen Navigationsplattform werden dabei durch Beschleunigungs- und Drehratensensoren erzeugt. Als Drehratensensor können hierbei mechanische Kreisel, faseroptische Drehratensensoren, Laserkreisel oder Mikro-Elektro-Mechanische-Drehratensensoren genutzt werden. Als Beschleunigungssensoren werden heute häufig Mikro-Mechanische-Sensoren eingesetzt. Hierbei wird insbesondere bei der Bestimmung des Kurswinkels während der Systeminitialisierung auf die Erddrehrate und die Gravitationsrichtung Bezug genommen. Die dazu zu bestimmende horizontale Komponente der Erddrehrate wird jedoch mit zunehmender geographischer Breite immer geringer, d.h. in Richtung der Pole wird die Kursbestimmung zunehmend ungenauer.

Bei dem Satellitennavigationssystem kann es sich um das Global Positioning System (GPS) oder um ein anderes Satellitennavigationssystem, wie z.B. Galileo, GLONASS oder Compass, handeln. Das Satellitennavigationssystem bestimmt die Position und die Geschwindigkeit des Fahrzeugs mittels Entfernungsbestimmung zu mindestens vier Satelliten im Erdorbit. In "schwach gekoppelten Systemen" wird die von dem Satellitennavigationssystem bereitgestellte Position und Geschwindigkeit im Kalman-Filter als Messung verwertet. In "stark gekoppelten Systemen" werden dagegen die Entfernungen und deren Änderungen zu den einzelnen Satelliten im Kalman-Filter als Messung verwertet. Dies ermöglicht durch Auswertung redundanter Messungen das Erkennen und Ausschließen von fehlerhaften Satelliten und eine Abschätzung der Fehlerraten und der Integrität. Dies erfordert aber im Vergleich mit einem "schwach gekoppelten System" einen erheblich größeren Aufwand der Datenverarbeitung.

Die inertiale Navigationsplattform und das Satellitennavigationssystem übermitteln die von ihnen bestimmten Messwerte an das Kalman-Filter. Basierend auf den vorher beobachteten Satelliten-Messwerten schätzt das Kalman-Filter die Korrekturen für die momentane Lage/Position des Fahrzeugs ab. Um diesen Effekt zu erzielen, muss die hybride Navigationsplattform jedoch beschleunigten Bewegungen ausgesetzt sein.

Durch diese Verkoppelung eines absoluten Positionssystems, wie es das Satellitennavigationssystem darstellt, mit einem relativen System, wie es durch eine inertiale Navigationsplattform gegeben ist, lassen sich durch das Kalman-Filter deshalb bei länger andauernder dynamischer Bewegung des Fahrzeugs rasch konvergierende und sehr genauen Lage- und Positionsdaten erzeugen, die die Genauigkeit von rein inertialen Navigationsplattformen deutlich übertreffen. Insbesondere ist eine sehr genaue Bestimmung des Kurswinkels möglich, da die Positionsdaten im Gegensatz zu den Messwerten von rein inertialen Navigationsplattformen nicht von der geographischen Breite abhängen, auf der sich die Navigationsplattform befindet.

Problematisch hierbei ist aber, dass die so gewonnenen hochgenauen Lage-, Kurs- und Positionsgenauigkeiten nur die Integrität des Satellitennavigationssystems aufweisen und zum Beispiel die Lagewinkel nicht mit einer für die Luftfahrt ausreichend hohen Integrität von 10⁻⁹/h ermittelt werden können. Die Integrität von schwach gekoppelten hybriden Systemen liegt mit 10⁻⁴ pro Stunde (ohne zusätzliche Integritätsüberwachung am Boden, wie z.B. SBAS ("Satellite Based Augmentation System"), GBAS ("Ground Based Augmentation System")) und bis 10⁻⁷ pro Stunde (mit Bodenüberwachung) unterhalb der Anforderungen der Luftfahrt.

Es ist deshalb nicht möglich, hybride Navigationsplattformen mit Hilfe von schwach gekoppelten Satellitennavigationssystemdaten so zu initialisieren, dass eine hohe Integrität erreicht wird, da die ungenügend hohe Integrität des Satellitennavigationssystems in die hybriden Navigationsplattformen übertragen wird. Deshalb kann z.B. für ein von einem Wasserfahrzeug aus startendes Luftfahrzeug keine genügend hohe Integrität mittels einer konventionellen hybriden Navigationsplattform bereitgestellt werden.

Der Erfindung liegt somit die Aufgabe zu Grunde, ein Verfahren und eine Vorrichtung zum Bestimmen von Navigationsdaten anzugeben, mit denen eine hohe Integrität gewährleistet ist.

Die Aufgabe wird erfindungsgemäß gelöst durch ein Verfahren mit den Merkmalen des Patentanspruchs 1 und eine Vorrichtung mit den Merkmalen von Anspruch 8.

Vorteilhafte Ausgestaltungen des Verfahrens bzw. der Vorrichtung sind in den Unteransprüchen angegeben.

Dadurch wird garantiert, dass die zweite Navigationseinrichtung mit Messwerten initialisiert wird, die höheren Integritätsanforderungen genügen, als sie die zweite Navigationseinrichtung selbst bereitstellen kann.

Es können also die hohe Integrität der ersten Navigationseinrichtung mit vorteilhaften Eigenschaften (z.B. hohe Messgenauigkeit von Positions- und Lagedaten) der zweiten Navigationseinrichtung kombiniert werden. Zum Beispiel kann die erste Navigationseinrichtung eine inertiale Navigationsplattform wie oben beschrieben und die zweite Navigationseinrichtung eine hybride Navigationsplattform wie oben beschrieben aufweisen.

In einem erfindungsgemäßen Szenario befindet sich ein Hubschrauber auf einem Schiff. Ziel ist es nach einer Initialisierungs- und Ausrichtphase des hybriden Systems die Kurs- und Lagewinkel mit der geforderten Genauigkeit und Integrität zur Verfügung zu stellen.

Das vorgeschlagene System beinhaltet dazu eine rein inertiale Navigationsplattform und eine hybride Navigationsplattform.

Zunächst führt das inertiale System ein klassisches Gyro Compass Alignment durch. Dazu sollte das System nur solche beschleunigten Bewegungen ausführen, die über den Zeitraum des Alignments betrachtet mittelwertfrei sind. Die inertiale Navigationsplattform wird nach dem Abschluss des dynamischen Gyro Compass Alignments mit den darin gewonnenen Kurs-/ Lagewinkeln initialisiert. Aufgrund der Bewegung ist jedoch die erzielte Genauigkeit für einen Navigationsbetrieb nicht ausreichend und das System wird als Kurs-/Lage-Referenz betrieben.

Alternativ kann das Heading Alignment (d.h. die Kursbestimmung) auch mit Hilfe eines Magnetsensors z.B. eines Kompasses) oder mittels einer Eingabe des aktuellen Headings durch den Piloten durchgeführt werden. Die Genauigkeit und Integrität des durch dieses alternative Verfahren initialisierten Headings muss mit den Integritätsanforderungen der Anwendung übereinstimmen. Dieses Verfahren ist aber aufgrund der eingeschränkten Genauigkeit auch nicht geeignet, um das System im Navigationsmodus betreiben zu können.

Die hybride Navigationsplattform wird mit den Kurs-/Lagewinkeln der inertialen Navigationsplattform initialisiert. Dies stellt sicher, dass das im Kalman-Filter implementierte lineare Fehlermodell verwendet werden kann.

Zum Zeitpunkt der Initialisierung stimmen Genauigkeit und Integrität von hybrider und inertialer Plattform überein.

Durch die nach der Initialisierung bzw. dem Alignment auftretenden beschleunigten Bewegungen durch Schiffsmanöver oder Flugbewegungen ist der Kalman-Filter unter Verwendung der GPS Messungen in der Lage, die Systemfehler zu schätzen und als Korrekturen anzubringen. Dies führen zu einer raschen Verbesserung der Kurs-/Lagewinkelgenauigkeit der Hybrid-Plattform. Erreichen die geschätzten Genauigkeiten die spezifizierten Werte, werden die Kurs-/Lagewinkel der Hybrid-Plattform gültig gesetzt. Jetzt stehen hochgenaue Kurs-/Lagewinkel zur Verfügung, wobei sich jedoch unter Einbeziehung der GPS Messungen die Integrität gegenüber dem Ausgangszustand verschlechtert hat und nicht mehr den Anforderungen entspricht.

Um die im hybriden System gewonnene Genauigkeit für die inertiale Navigationsplattform mit hoher Integrität zu nutzen, wird folgender Ansatz gemacht:
Sind die Differenzen zwischen hybriden und inertialen Kurs-/Lagewinkeln nicht größer als die zulässigen Grenzwerte, die für die Integrität festgelegt wurden, kann die Integrität zum Zeitpunkt des Vergleichs für die von den GPS Messungen beeinflussten hybriden Kurs-/Lagewinkel als gesichert betrachtet werden. In diesem Fall kann die inertiale Plattform mit den hochgenauen Kurs-/Lagewinkeln der hybriden Plattform re-initialisiert werden. Nach dieser Re-initialisierung stehen hochgenaue Kurs-/Lagewinkel der inertialen Plattform mit der geforderten Integrität zur Verfügung und das System kann von dem Betrieb als Kurs-/Lagereferenzsystem in den Navigationsmodus übergehen.

Die Erfindung wird im Folgenden unter Bezugnahme auf die Figuren an Ausführungsbeispielen näher erläutert. Es zeigen
- FIG. 1A und 1B: schematisch die Navigation von Wasser- und Luftfahrzeugen,
- FIG. 2A bis 2C: schematisch die Lage- und Kurswinkel eines Fahrzeugs,
- FIG. 3: schematisch eine Vorrichtung zum Bestimmen von Navigationsdaten gemäß einer Ausführungsform,
- FIG. 4: ein schematisches Ablaufdiagramm eines Verfahrens zum Bestimmen von Navigationsdaten gemäß einer Ausführungsform.

In den Figuren sind einander entsprechende Bauteile bzw. Bauteilgruppen mit denselben Bezugsziffern gekennzeichnet.

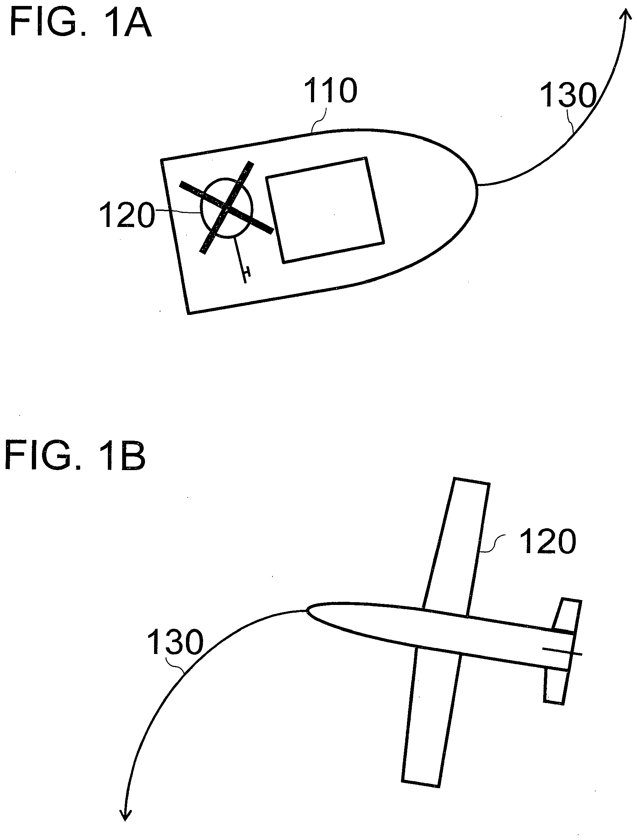

FIG. 1A zeigt ein Wasserfahrzeug 110. Bei dem Wasserfahrzeug 110 kann es sich um Schiffe verschiedener Größe handeln. Das Wasserfahrzeug kann zum Beispiel ein Sportboot, ein Fischerboot, eine Yacht, ein Kreuzer, ein Fregatte, ein Schlachtschiff, ein Kreuzfahrtschiff oder ein Flugzeugträger sein.

Auf dem Wasserfahrzeug 110 kann sich ein Luftfahrzeug 120 befinden. Das Luftfahrzeug 120 kann zum Beispiel ein Helikopter, ein Flugzeug oder eine Rakete sein. Gemäß einer Ausführungsform ist das Wasserfahrzeug 110 eine Yacht und das Luftfahrzeug 120 ein Hubschrauber.

Das Wasserfahrzeug 110 navigiert entlang eines Kurses 130. Zur Bestimmung des Kurses 130 weist das Wasserfahrzeug 110 verschiedene Navigationssysteme auf. Mit diesen Navigationssystemen kann das Wasserfahrzeug 110 seine Position (Länge und Breite), seine Ausrichtung zum Nordpol (Kurswinkel), seine Neigung zur Seite (Rollwinkel), seine Neigung nach vorne (Nickwinkel) und seines Geschwindigkeit bestimmen.

Das Luftfahrzeug 120 ist mit dem Wasserfahrzeug 110 fest verbunden und weist deshalb die gleichen Positionsdaten auf. Da die Navigation zu Wasser anderen Anforderungen genügen muss als die Navigation in der Luft, ist es jedoch notwendig, das Luftfahrzeug 120 bei dem Verlassen des Wasserfahrzeugs 110 mit Navigationsdaten zu versehen, die den Anforderungen der Luftfahrt entsprechen.

FIG. 1B zeigt das Luftfahrzeug 120 auf seinem Kurs 130, nachdem es sich vom Wasserfahrzeug 110 getrennt hat. Das Luftfahrzeug 120 kann gemäß einer anderen Ausführungsform auch von einem anderen Ort als dem Wasserfahrzeug 110 gestartet sein, zum Beispiel von der Erde oder von der Wasseroberfläche. Gemäß einer Ausführungsform ist das Luftfahrzeug 120 ein Flugzeug.

Die Navigationsdaten, die dem Luftfahrzeug 120 zur Verfügung stehen, müssen in der Regel hohen Anforderungen genügen. Insbesondere muss die Integrität von Messungen, die Navigationssysteme an Bord des Luftfahrzeugs 120 ausführen, genügend hoch sein, um eine Fehlbestimmung der Position/Lage und somit gefährliche Situationen zu vermeiden.

Wie oben bereits beschrieben, ist für die Luft- und Seefahrt insbesondere die Integrität von Roll- und Nickwinkel (Lagewinkel) sowie die des Kurswinkels von Bedeutung , da diese die Orientierung des Wasser- oder Luftfahrzeuges 110, 120 im Raum beschreiben.

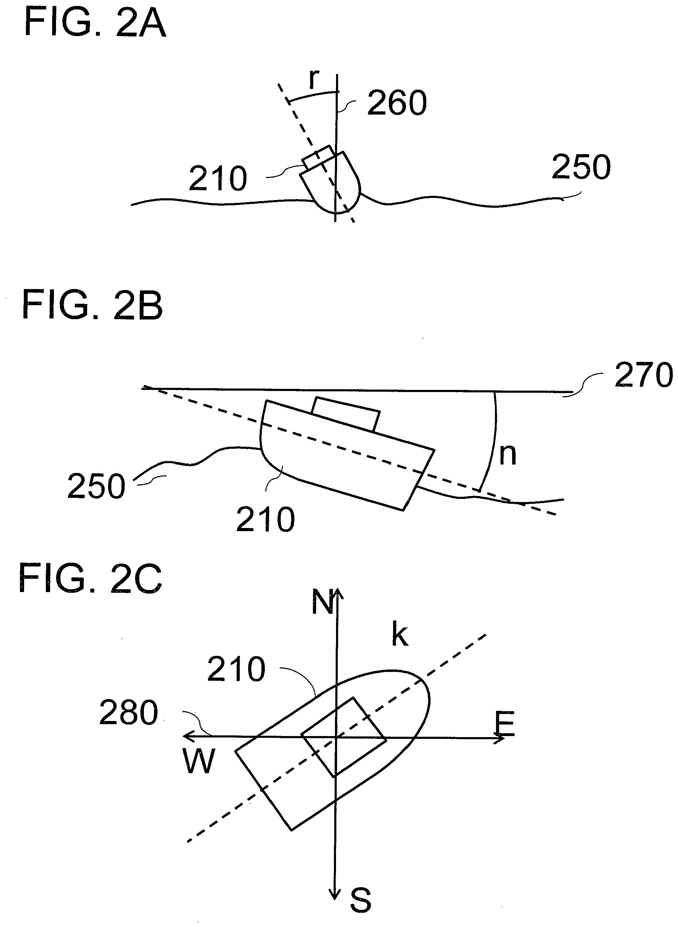

Die Lage- und Kurswinkel sind in FIG. 2A bis 2C gezeigt.

FIG. 2A zeigt den Rollwinkel r anhand eines Wasserfahrzeugs 210. Der Rollwinkel r ist ein Lagewinkel und beschreibt die Verdrehung der Querachse des Wasserfahrzeuges gegenüber der Horizontalen. Positives Vorzeichen hat der Rollwinkel dann, falls die Steuerbordseite (rechts in Vorausrichtung gesehen) des Wasserfahrzeuges nach unten geneigt ist. Dabei ist die Drehachse, die senkrecht auf der Ebene steht, in der der Rollwinkel gemessen wird, ist um den Nick- oder Pitchwinkel gegenüber der Horizontalebene geneigt, d.h. die Rollwinkel-Messebene ist keine Vertikalebene. Der Rollwinkel r kann durch Manöver des Wasserfahrzeugs 210, durch ungleiche Belastung des Wasserfahrzeugs 210 oder durch Bewegungen des Wassers 250 von Null verschieden sein.

FIG. 2B zeigt als weiteren Lagewinkel den Nick- oder Pitchwinkel n. Der Nickwinkel beschreibt die Verdrehung der Längsachse des Wasserfahrzeugs gegenüber der Horizontalen. Die Messebene des Pitchwinkels ist die Ebene, die die Längsachse des Wasserfahrzeuges enthält und senkrecht auf der Horizontalebene steht, ist also eine Vertikalebene. Befindet sich die Vorausrichtung der Längsachse des Wasserfahrzeuges oberhalb der Horizontalebene erhält man einen positiven Pitchwinkel. Wie der Rollwinkel r, kann der Nickwinkel n durch Manöver des Wasserfahrzeugs 210, durch ungleichmäßige Beladung des Wasserfahrzeugs 210 oder durch Bewegung des Wassers 250 von Null verschieden sein.

Die Lagewinkel eines Luftfahrzeugs werden in analoger Weise zu den Lagewinkeln des Wasserfahrzeugs 210 bestimmt. Bei einem Luftfahrzeug werden die Lagewinkel im Wesentlichen durch die Manöver des Luftfahrzeugs bestimmt, sie können aber auch von der Beladung des Fahrzeugs, von der Dichte von Luftschichten und von herrschenden Winden abhängen.

FIG. 2C zeigt den Kurswinkel k des Wasserfahrzeugs 210. Der Kurswinkel k ist der Winkel zwischen der in der Pitch-Messebene ausgeführten Projektion der Längsachse des Wasserfahrzeug in die Horizontalebene und der in dieser Ebene definierten geographischen Nordrichtung. Der Kurswinkel k ist in östlicher Richtung positiv definiert. Der Kurswinkel eines Luftfahrzeugs ist analog zum Kurswinkel des Wasserfahrzeugs 210 bestimmt

Wie oben beschrieben ist es nicht möglich, hybride Navigationsplattformen mit Hilfe von schwach gekoppelten Satellitennavigationssystemdaten so zu initialisieren, dass eine hohe Integrität für das Bestimmen von Lage- und Kurswinkeln erreicht werden kann, da die ungenügend hohe Integrität des Satellitennavigationssystems in die hybriden Navigationsplattformen übertragen wird. Deshalb kann insbesondere für ein von einem Wasserfahrzeug aus startendes Luftfahrzeug keine genügend hohe Integrität mittels einer konventionellen hybriden Navigationsplattform bereitgestellt werden.

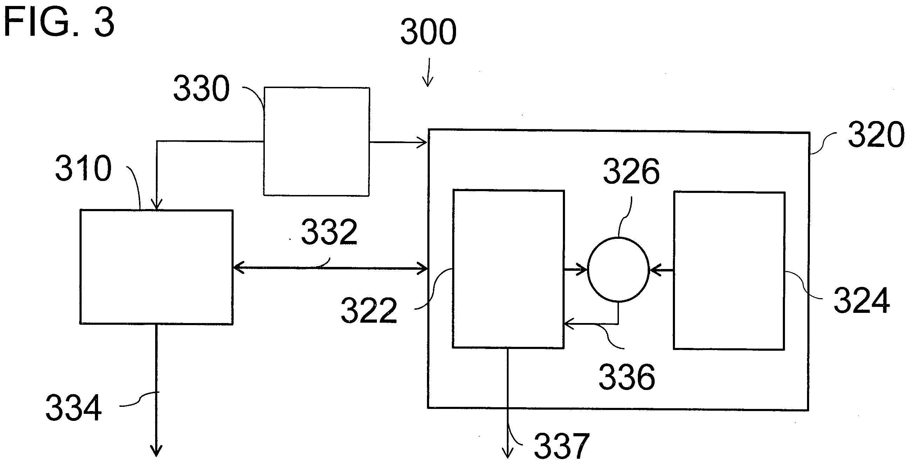

FIG. 3 zeigt schematisch eine Vorrichtung gemäß einer Ausführungsform, mit der dieses Problem gelöst werden kann.

Die Vorrichtung 300 weist eine erste Navigationseinrichtung 310 und eine zweite Navigationseinrichtung 320 auf. Beide Navigationseinrichtungen werden durch eine gemeinsame Sensoreinheit 330 mit inertialen Messdaten, wie etwa Beschleunigungsdaten oder Drehraten, versorgt. Alle Komponenten der Vorrichtung 300 befinden sich gemeinsam auf einem Luftfahrzeug.

Die Sensoreinheit 330 beinhaltet drei Drehratensensoren und drei Beschleunigungssensoren. Der Drehratensensor kann ein mechanischer Kreisel, ein faseroptischer Drehratensensor, ein Laserkreisel oder ein Mikro-Mechanischer-Drehratensensor sein. Als Beschleunigungssensor kann ein Mikro-Mechanischer-Sensor eingesetzt werden.

Die erste Navigationseinrichtung 310 und die zweite Navigationseinrichtung 320 sind dazu geeignet, die Kurs- und Lagewinkel eines Fahrzeugs zu bestimmen. Das Fahrzeug kann ein Wasser-, Land- oder Luftfahrzeug sein.

Die erste und die zweite Navigationseinrichtung 310, 320 geben die Messwerte der von ihnen bestimmten Kurs- und Lagewinkel über einen ersten Ausgangskanal 334 und einen zweiten Ausgangskanal 337 aus. Die von der ersten und der zweiten Navigationseinrichtung 310, 320 bestimmten Messwerte können zum Beispiel einem Führer des Fahrzeugs angezeigt werden. Des Weiteren sind die erste und die zweite Navigationseinrichtung 310, 320 dazu geeignet, mittels einer Datenverbindung 332 Messwerte auszutauschen.

Gemäß einer Ausführungsform weist die erste Navigationseinrichtung 310 eine erste Navigationsplattform auf, die Kurs- und Lagewinkelmesswerte mittels Messwerten bestimmt, die von der Sensoreinheit 330 aufgenommen werden.

Die zweite Navigationseinrichtung 320 weist eine zweite Navigationsplattform 322, ein Satellitennavigationssystem 324 und ein Kalman-Filter 326 auf. Die zweite Navigationsplattform 322 kann Messwerte der Kurs- und Lagewinkel mittels Messwerten bestimmen, die von der Sensoreinheit 330 aufgenommen werden.

Das Satellitennavigationssystem 324 bestimmt die Position und Geschwindigkeit des Fahrzeugs mittels Entfernungsbestimmung zu mindestens vier Satelliten im Erdorbit. Bei dem Satellitennavigationssystem 324 kann es sich um das Global Positioning System (GPS) oder um ein anderen Satellitennavigationssystem, wie z.B. Galileo, GLONASS oder Compass, handeln.

Die zweite Navigationsplattform 322 und das Satellitennavigationssystem 324 übermitteln die von ihnen bestimmten Messwerte für Position und Geschwindigkeit an das Kalman-Filter 326. Basierend auf den vorher beobachteten Messwerten schätzt das Kalman-Filter 326 die momentan vorhandenen Fehler von Kurs- und Lagewinkel, Position, Geschwindigkeit sowie die Fehler der Drehraten- und Beschleunigungssensoren ab. Die daraus abgeleiteten Korrekturwerte werden der zweiten Navigationsplattform 322 über die Verbindung 336 zugeführt. Die somit korrigierten Messwerte der zweiten Navigationsplattform werden über den zweiten Ausgangskanal 337 ausgegeben.

Die erste Navigationseinrichtung 310 bzw. die erste Navigationsplattform bestimmt Kurs- und Lagewinkelmesswerte für das Fahrzeug. Die erste Navigationseinrichtung 310 hat hierbei eine Integrität, die größer ist als eine vorgegebene Lagewinkelintegrität, das heißt Fehlmessungen der von der ersten Navigationseinrichtung 310 bestimmten Lagewinkelmesswerte treten mit einer Wahrscheinlichkeit auf, die kleiner als eine vorgegebene Lagewinkelfehlerrate ist. Die vorgegebene Lagewinkelfehlerrate kann hierbei 10⁻⁹ pro Stunde sein.

Die zweite Navigationseinrichtung 320 bestimmt, ausgehend von der Initialisierung mit den Lagewinkelmesswerten der ersten Navigationseinrichtung 310, unabhängig von der ersten Navigationseinrichtung 310 die Lagewinkelmesswerte für das Fahrzeug. Dabei verbessert sich mit Hilfe der Messdaten des Satellitennavigationssystems 324 und des Kalman-Filters 326 kontinuierlich die Genauigkeit. Gleichzeitig verschlechtert sich die Integrität der zweiten Navigationseinrichtung 320 unter dem Einfluss der Messwerte des Satellitennavigationssystems 324.

Die zweite Navigationseinrichtung 320 weist somit eine niedrigere Integrität auf als die erste Navigationseinrichtung 310. Die zweite Navigationseinrichtung 320 generiert Fehlmessungen der Lagewinkelmesswerte mit einer Wahrscheinlichkeit, die größer als die vorgegebene Lagewinkelfehlerrate ist.

Fehlmessungen der Lagewinkelmesswerte treten auf, wenn einer der Lagewinkelmesswerte um mehr als einen vorgegebenen Lagewinkeltoleranzwert von einem Lagewinkelreferenzwert abweicht. Der Lagewinkelreferenzwert kann hierbei der tatsächliche Wert des Lagewinkels sein oder ein aus vorherigen Messwerten interpolierter geschätzter Wert des Lagewinkels.

Der Lagewinkeltoleranzwert kann situationsbedingt angepasst werden. Zum Beispiel kann der Lagewinkeltoleranzwert beim Landanflug oder beim Start eines Luftfahrzeugs niedriger sein als während des Fluges in großer Höhe. Der Lagewinkeltoleranzwert kann auch vorgegeben und/oder konstant sein. Der Lagewinkeltoleranzwert kann zwischen 4° und 5° liegen.

Die erste Navigationseinrichtung 310 kann auch Kurswinkelmesswerte für das Fahrzeug bestimmen. Die erste Navigationseinrichtung 310 kann die Kurswinkelmesswerte mit der ersten Navigationsplattform bestimmen. Die erste Navigationseinrichtung 310 kann die Kurswinkelmesswerte vor oder nach der Bestimmung der Lagewinkelmesswerte oder auch gleichzeitig mit der Bestimmung der Lagewinkelwerte bestimmen.

Die erste Navigationseinrichtung 310 weist hierbei eine Integrität auf, die größer ist als eine vorgegebene Kurswinkelintegrität, das heißt Fehlmessungen der von der ersten Navigationseinrichtung 310 bestimmten Kurswinkelmesswerte, treten mit einer Wahrscheinlichkeit auf, die kleiner als eine vorgegebene Kurswinkelfehlerrate ist. Die vorgegebene Kurswinkelfehlerrate kann hierbei 10⁻⁷ pro Stunde sein.

Fehlmessungen der Kurswinkelmesswerte treten auf, wenn der Kurswinkelmesswert um mehr als einen vorgegebenen Kurswinkeltoleranzwert von einem Kurswinkelreferenzwert abweicht. Der Kurswinkelreferenzwert kann hierbei der tatsächliche Wert des Kurswinkels sein.

Der Kurswinkeltoleranzwert kann situationsbedingt angepasst werden. Zum Beispiel kann der Kurswinkeltoleranzwert beim freien Flug größer sein als beim Landeanflug. Der Kurswinkeltoleranzwert kann auch vorgegeben und/oder konstant sein und z.B. 10° betragen.

Die Kurswinkelmesswerte der ersten Navigationseinheit 310 können auch mit einem Magnetsensor, wie zum Beispiel einem Magnetkompass, initialisiert werden. Die Kurswinkelmesswerte können auch von Hand initialisiert werden. Der vorgegebene Kurswinkelfehler darf hierbei nicht überschritten werden.

Über die Datenverbindung 332 werden die Lagewinkelmesswerte und der Kurswinkelmesswert an die zweite Navigationseinrichtung 320 übergeben. Die zweite Navigationseinrichtung 320 wird daraufhin mit diesen Messwerten initialisiert. Dies garantiert, dass die zweite Navigationseinrichtung 320 mit Messwerten initialisiert wird, die höheren Integritätsanforderungen genügen, als sie die zweite Navigationseinrichtung 320 selbst bereitstellen kann.

Nachdem die zweite Navigationseinrichtung 320 mit den Messwerten der ersten Navigationseinrichtung 310 initialisiert wurde, bestimmt die zweite Navigationseinrichtung 320 Kurs- und Lagewinkelmesswerte. Dazu muss das Fahrzeug vorzugsweise ein Luftfahrzeug, auf dem sich die zweite Navigationseinrichtung 320 befindet, beschleunigt bewegen, um die Fehlerschätzung des Kalman-Filters 326 anzuregen. Die beschleunigte Bewegung kann durch Manöver des Schiffs, auf dem sich das Luftfahrzeug stationär befindet, oder durch Flugbewegungen des gestarteten Luftfahrzeuges aufgebracht werden.

Während Kurs- und Lagewinkelmesswerte mit der ersten Navigationseinrichtung 310 bestimmt werden, werden mit der zweiten Navigationseinrichtung 320 ebenfalls Kurs- und Lagewinkelmesswerte bestimmt. Die Konvergenz des Kalman-Filters 326 ist erkennbar anhand der Varianzen der geschätzten Fehler. Befinden sich die geschätzten Genauigkeiten der Fehler unterhalb vordefinierter Grenzwerte, ist ein stabiler Zustand erreicht und die Lagewinkelmesswerte und der Kursmesswerte der zweiten Navigationseinheit 320 werden gültig gesetzt.

Um eine Re-Initialisierung der ersten Navigationseinrichtung 310 mit den nun genaueren Kurs- und Lagewinkelmesswerten der zweiten Navigationseinrichtung 320 zu ermöglichen, werden die so bestimmten Winkelmesswerte der ersten und der zweiten Navigationseinrichtung 310, 320 verglichen. Um sowohl eine hohe Güte der Positionsbestimmung als auch eine hohe Integrität der Lage- und Kurswinkel zu gewährleisten, wird eine Re-Initialisierung der ersten Navigationseinrichtung 310 und ein Übergang der ersten Navigationseinrichtung 310 in den Navigationsmodus anhand der von der zweiten Navigationseinrichtung 320 bestimmten Messwerte erst dann erlaubt, wenn die Abweichung der von der ersten und der zweiten Sensoreinrichtung 310, 320 bestimmten Winkelmesswerte innerhalb der durch die Integritätsanforderungen gegebenen Winkeltoleranzwerte liegt.

Dadurch kann die hohe Integrität der ersten Sensoreinrichtung 310 auf die hochgenauen Messwerte der zweiten Navigationseinrichtung 320 zum Zeitpunkt dieser Prüfung bzw. Abfrage übertragen werden. Die genaueren Messwerte der zweiten Navigationseinrichtung 320 sind somit zur Re-Initialisierung der ersten Navigationsrichtung 310 ohne Verlust deren hohen Integrität geeignet.

Gemäß einer Ausführungsform wird nach Inbetriebnahme des in FIG. 1A gezeigten Luftfahrzeugs 120, das sich auf dem Wasserfahrzeug 110 befindet, eine auf dem Luftfahrzeug 120 angebrachte Vorrichtung, bestehend aus einer ersten Navigationseinrichtung 310 und einer zweiten Navigationseinrichtung 320, in Betrieb genommen. Die zweite Navigationseinrichtung 320 übernimmt Lagewinkelmesswerte von der ersten Navigationseinrichtung 310.

Während die erste Navigationseinrichtung 310 erstmalig Winkelmesswerte bestimmt, befindet sich das Luftfahrzeug 120 und das Wasserfahrzeug 110 in Ruhe und ist keinen Beschleunigungen ausgesetzt. Die sich auf dem Luftfahrzeug befindende Vorrichtung 300 kann aber auch solchen Beschleunigungen ausgesetzt sein, die sich im zeitlichen Mittel aufheben. Dies können zum Beispiel Bewegungen des Wasserfahrzeugs 110 sein, die durch Wellengang hervorgerufen werden.

Nach der Übergabe der Messwerte von der ersten Navigationseinrichtung 310 an die zweite Navigationseinrichtung320 und der Initialisierung der zweiten Navigationseinrichtung 320 mit diesen Messwerten kann das Luftfahrzeug 120 starten. Die Kurs- und Lagewinkelbestimmmung erfolgt dabei anfangs mittels der ersten Navigationseinrichtung 310 mit der weiter Winkelmesswerte bestimmt werden, während die zweite Navigationseinrichtung 320 beständig Lage- und Kurswinkelmesswerte bestimmt.

Die so bestimmten Winkelmesswerte der ersten und der zweiten Navigationseinrichtung 310, 320 werden verglichen, um die Gültigkeit der Lage- und Kurswinkelmesswerte der zweiten Navigationseinrichtung 320 zu prüfen. Um sowohl eine hohe Güte der Positionsbestimmung als auch eine hohe Integrität zu gewährleisten, wird eine Navigation des Luftfahrzeugs 120 anhand der von der zweiten Einrichtung 320 bestimmten Messwerte erst dann erlaubt, wenn die Abweichung der von der ersten und der zweiten Navigationseinrichtung 310, 320 bestimmten Winkelmesswerte innerhalb der durch die Integritätsanforderungen gegebenen Winkeltoleranzwerte liegt. Die Lagewinkeltoleranzwerte können z.B. zwischen 4° und 5° betragen. Der Kurswinkeltoleranzwert kann z.B. 10° betragen. Auch andere Toleranzwerte können ohne weiteres vorgegeben werden.

Nachdem eine volle Funktionsfähigkeit der zweiten Navigationseinrichtung 320 durch Übereinstimmen der von der ersten Navigationseinrichtung 310 und der zweiten Navigationseinrichtung 320 bestimmten Lagewinkelmesswerte innerhalb des Lagewinkeltoleranzwerts gewährleistet ist, wird die erste Navigationseinrichtung 310 über die Datenverbindung 332 mit den Messwerten der zweiten Navigationseinrichtung 320 re-initialisiert.

Für die weitere Kurs- und Lagewinkelbereitstellung für die kritischen Funktionen des Luftfahrzeugs 120 in der Luft, werden nach der Re-Initialisierung mittels der Messwerte der zweiten Navigationseinrichtung die Messwerte der ersten Navigationseinrichtung 310 benutzt. Mit der zweiten Navigationseinrichtung 320 werden weiter Messwerte bestimmt, die z.B. für die Navigation, die unkritischer eingestuft ist als die Kurs- und Lagewinkel, genutzt werden können.

Gemäß einer weiteren Ausführungsform werden die Funktionen der ersten und zweiten Navigationsplattformen sowie das Kalman-Filter 326 von einem Computerprozessor, wie etwa einer CPU ausgeführt werden. Dabei können die Funktionen der erste und die zweite Navigationsplattform mit der gleichen Soft- oder Hardware implementiert werden. Dann sind die erste und die zweite Navigationsplattform die gleichen. Dies führt zu einer Reduzierung von Bauteilen und somit zu einer Platz und Kostenersparnis.

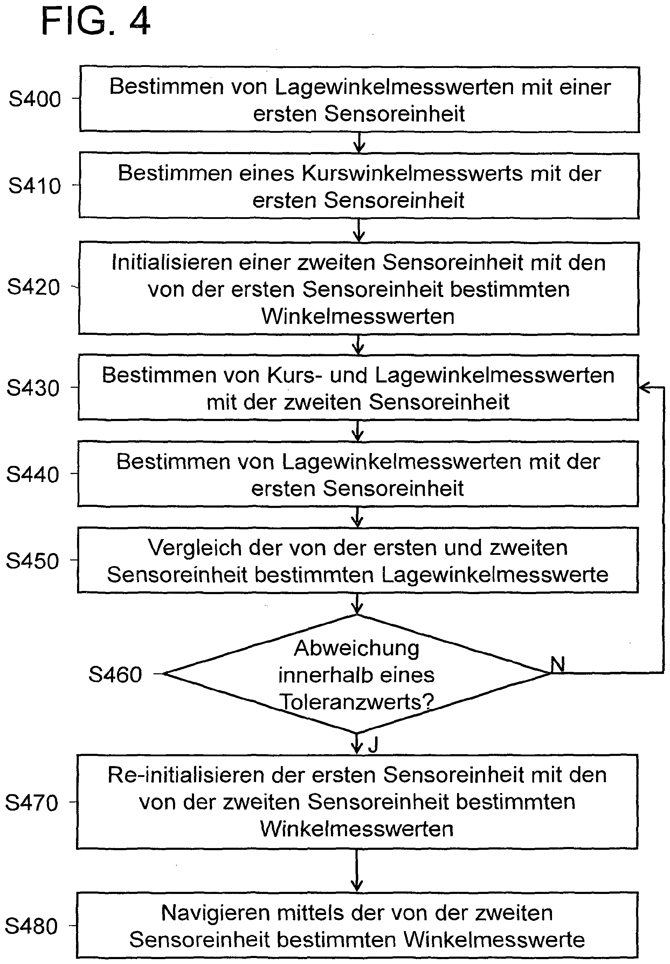

In FIG. 4 ist ein Ablaufdiagramm eines Verfahrens zum Bestimmen von Navigationsdaten gemäß einer Ausführungsform gezeigt.

In einem Schritt S400 werden Lagewinkelmesswerte und Kurswinkelmesswerte mit einer ersten Navigationseinrichtung 310 bestimmt. Die Kurswinkelmesswerte können mit der ersten Navigationseinrichtung 310 durch ein Gyro Compassing Verfahren oder einem Magnetsensor, wie zum Beispiel einem Magnetkompass, oder auch manuell bestimmt werden.

In einem Schritt S420 wird eine zweite Navigationseinrichtung 320 mit den von der ersten Navigationseinrichtung 310 bestimmten Winkelmesswerten initialisiert.

Die erste Navigationseinrichtung 310 weist hierbei eine Integrität auf, die größer ist als eine vorgegebene Lagewinkelintegrität, das heißt Fehlmessungen der von der ersten Navigationseinrichtung 310 bestimmten Lagewinkelmesswerte treten mit einer Wahrscheinlichkeit auf, die kleiner als eine vorgegebene Lagewinkelfehlerrate ist. Die vorgegebene Lagewinkelfehlerrate kann hierbei 10⁻⁹ pro Stunde sein. Die zweite Navigationseinrichtung 320 hat eine niedrigere Integrität als die erste Navigationseinrichtung 310. Die zweite Navigationseinrichtung 320 generiert Fehlmessungen der Lagewinkelmesswerte mit einer Wahrscheinlichkeit die größer als die vorgegebene Lagewinkelfehlerrate ist.

Fehlmessungen der Lagewinkelmesswerte treten auf, wenn einer der Lagewinkelmesswerte um mehr als einen vorgegebenen Lagewinkeltoleranzwert von einem Lagewinkelreferenzwert abweicht. Der Lagewinkelreferenzwert kann hierbei der tatsächliche Wert des Lagewinkels sein oder ein aus vorherigen Messwerten interpolierter geschätzter Wert des Lagewinkels.

Der Lagewinkeltoleranzwert kann situationsbedingt angepasst werden und z.B. zwischen 4° und 5° liegen.

In einem Schritt S430 bestimmte die zweite Navigationseinrichtung 320 kontinuierlich Kurs- und Lagewinkelmesswerte, nachdem sie initialisiert wurde. Dabei benutzt sie zur Erhöhung der Genauigkeit die Messwerte eines Satellitennavigationssystems.

In einem Schritt S440 werden kontinuierlich Kurs- und Lagewinkelmesswerte mit der ersten Navigationseinrichtung 310 bestimmt.

In einem Schritt S450 werden nach Erreichen der erforderlichen Genauigkeit der zweiten Navigationseinrichtung 320 (d.h. das Kalman-Filter 326 ist eingeschwungen) die von der ersten und der zweiten Navigationseinrichtung 310, 320 bestimmt Lagewinkel verglichen.

In einen Schritt S460 wird überprüft, ob die Abweichungen der bestimmten Lagewinkelmesswerte voneinander unterhalb des Lagewinkeltoleranzwerts liegen. Falls dies nicht der Fall ist (N), werden die Schritte S430 bis S460 wiederholt.

Falls die Werte der Abweichungen der bestimmten Lagewinkelmesswerte voneinander unterhalb des vorgegebenen Lagewinkeltoleranzwerts liegen (J), wird die erste Navigationseinrichtung 310 mit den von der zweiten Navigationseinrichtung 320 bestimmten Kurs- und Lagewinkelmesswerten re-initialisiert.

In einem Schritt S480 wird eine Kurs- und Lagewinkelbestimmung und Navigation von der re-initialisierten ersten Navigationseinrichtung 310 ausgeführt und Messwerte für kritische Funktionen des Luftfahrzeuges. bereitgestellt. Die zweite Navigationseinrichtung liefert weiterhin Kurs- und Lagewinkelmesswerte für unkritische Luftfahrzeug-Funktionen.

Mit dem oben beschriebenen Verfahren können Navigationsdaten bestimmt werden, die hohen Anforderungen an die Integrität und die Lagewinkel-, Kurs- und Positionsgenauigkeit genügen.

## Patentansprüche

1. Verfahren zum Bestimmen von Navigationsdaten, aufweisend:
Bestimmen (S400) von Lagewinkelmesswerten mit einer ersten, inertialen Navigationseinrichtung (310); und
Initialisieren einer zweiten, hybriden Navigationseinrichtung (320) mit den von der ersten Navigationseinrichtung (310) bestimmten Lagewinkelmesswerten, wobei
die erste Navigationseinrichtung (310) und die zweite Navigationseinrichtung (320) von einer Sensoreinheit (330) mit Drehraten- und Beschleunigungsmesswerten zu dem Bestimmen von Lagewinkelmesswerten versorgt werden; wobei
Fehlmessungen der von der ersten Navigationseinrichtung (310) bestimmten Lagewinkelmesswerte mit einer Wahrscheinlichkeit auftreten, die kleiner als eine vorgegebene Lagewinkelfehlerrate ist;
Fehlmessungen der von der zweiten Navigationseinrichtung (320) bestimmten Lagewinkelmesswerte mit einer Wahrscheinlichkeit auftreten, die größer als die vorgegebene Lagewinkelfehlerrate ist; und
eine Fehlmessung der Lagewinkelmesswerte vorliegt, wenn einer der bestimmten Lagewinkelmesswerte um mehr als einen vorgegebenen Lagewinkeltoleranzwert von einem entsprechenden Lagewinkelreferenzwert abweicht.

2. Verfahren nach Anspruch 1, des Weiteren aufweisend:
Bestimmen (S410) eines Kurswinkelmesswerts zeitlich gleichzeitig dem Be-stimmen der Lagewinkelmesswerte,
Initialisieren (S420) der zweiten Navigationseinrichtung (320) mit den von der ersten Navigationseinrichtung (310) bestimmten Lagewinkelmesswerten und dem Kurswinkelmesswert, wobei
Fehlmessungen des Kurswinkelmesswerts mit einer Wahrscheinlichkeit auftreten, die kleiner als eine vorgegebene Kurswinkelfehlerrate ist; und
eine Fehlmessung der Kurswinkelmesswerte vorliegt, wenn der bestimmte Kurswinkelmesswert um mehr als einen vorgegebenen Kurswinkeltoleranzwert von einem entsprechenden Kurswinkelreferenzwert abweicht.

3. Verfahren nach Anspruch 2, wobei der Kurswinkelmesswert mit der ersten Navigationseinrichtung (310), mit einem Magnetsensor oder mit einer manuellen Eingabe bestimmt wird.

4. Verfahren nach einem der vorhergehenden Ansprüche, des Weiteren aufweisend:
Bestimmen (S430) von Lage- und Kurswinkelmesswerten mit der zweiten Navigationseinrichtung (320) zeitlich nach dem Initialisieren der zweiten Navigationseinrichtung (320) mit den von der ersten Navigationseinrichtung (310) bestimmten Lagewinkelmesswerten;
Bestimmen (S440) von Lagewinkelmesswerten mit der ersten Navigationseinrichtung (310) während des Bestimmens der Lage- und Kurswinkelmesswerte mit der zweiten Navigationseinrichtung (320);
Vergleichen (S450) der von der ersten Navigationseinrichtung (310) und von der zweiten Navigationseinrichtung (320) bestimmten Lagewinkelmesswerte, wobei, (S460) wenn die bestimmten Lagewinkelmesswerte um weniger als den vorgegebenen Lagewinkeltoleranzwert voneinander abweichen,
dann Re-initialisieren (S470) der ersten Navigationseinrichtung (310) mit den von der zweiten Navigationseinrichtung (320) bestimmten Lage- und Kurswinkelmesswerten; und
dann Navigieren (S480) anhand der von der zweiten Navigationseinrichtung (320) bestimmten Lage- und Kurswinkelmesswerte.

5. Verfahren nach einem der vorhergehenden Ansprüche, wobei
die erste Navigationseinrichtung (310) eine erste Navigationsplattform aufweist; und
die zweite Navigationseinrichtung (320) eine zweite Navigationsplattform (322), ein Satellitennavigationssystem (324) und ein Kalman-Filter (326) aufweist, das die Daten der zweiten Navigationsplattform (322) und des Satellitennavigationssystems (324) koppelt.

6. Verfahren nach Anspruch 5, wobei die erste Navigationsplattform und die zweite Navigationsplattform (322) die gleichen sind.

7. Verfahren nach einem der vorhergehenden Ansprüche, wobei die erste und die zweite Navigationseinrichtung (310, 320) sowie die Sensoreinheit (330) bei erstmaliger Bestimmung von Winkeln nicht beschleunigt werden oder die erste und die zweite Navigationseinrichtung (310, 320) sowie die Sensoreinheit (330) bei erstmaliger Bestimmung von Winkeln derart beschleunigt wird, dass sich die Beschleunigungen im zeitlichen Mittel aufheben.

8. Vorrichtung (300) zum Bestimmen von Navigationsdaten, mit:
einer ersten, inertialen Navigationseinrichtung (310), geeignet zum Bestimmen von Lagewinkelmesswerten;
einer zweiten, hybriden Navigationseinrichtung (320), geeignet zum Bestimmen von Lagewinkelmesswerten, die mit den von der ersten Navigationseinrichtung (310) bestimmten Lagewinkelmesswerten initialisiert wird; und mit
einer Sensoreinheit (330), die dazu eingerichtet ist, die erste Navigationseinrichtung (310) und die zweite Navigationseinrichtung (320) mit Drehraten- und Beschleunigungsmesswerten zu dem Bestimmen von Lagewinkelmesswerten zu versorgen, wobei Fehlmessungen der von der ersten Navigationseinheit (310) bestimmten Lagewinkelmesswerte mit einer Wahrscheinlichkeit auftreten, die kleiner als eine vorgegebene Lagewinkelfehlerrate ist;
Fehlmessungen der von der zweiten Navigationseinheit (320) bestimmten Lagewinkelmesswerte mit einer Wahrscheinlichkeit auftreten, die größer als die vorgegebene Lagewinkelfehlerrate ist; und wobei
eine Fehlmessung der Lagewinkelmesswerte vorliegt, wenn einer der bestimmten Lagewinkelmesswerte um mehr als einen vorgegebenen Lagewinkeltoleranzwert von einem entsprechenden Lagewinkelreferenzwert abweicht.

9. Vorrichtung (300) nach Anspruch 8, wobei
die erste Navigationseinrichtung (310) geeignet ist zum Bestimmen eines Kurswinkelmesswerts zeitlich nach dem Bestimmen der Lagewinkelmesswerte:
die zweite Navigationseinrichtung (320) geeignet ist zum Initialisieren mit den von der ersten Navigationseinrichtung bestimmten Winkelmesswerten;
Fehlmessungen des Kurswinkelmesswerts mit einer Wahrscheinlichkeit auftreten, die kleiner als eine vorgegebene Kurswinkelfehlerrate ist; und
eine Fehlmessung der Kurswinkelmesswerte vorliegt, wenn der bestimmte Kurswinkelmesswert um mehr als einen vorgegebenen Kurswinkeltoleranzwert von einem entsprechenden Kurswinkelreferenzwert abweicht.

10. Vorrichtung (300) nach einem der Ansprüche 8 oder 9, wobei
die zweite Navigationseinrichtung (320) geeignet ist zum Bestimmen von Lage- und Kurswinkelmesswerten zeitlich nach dem Initialisieren der zweiten Navigationseinrichtung (320) mit den von der ersten Navigationseinrichtung (310) bestimmten Lagewinkelmesswerten;
die erste Navigationseinrichtung (310) geeignet ist zum Bestimmen der Lagewinkel während des Bestimmens der Lage- und Kurswinkel mit der zweiten Navigationseinrichtung (320);
die erste Navigationseinrichtung (310) und die zweite Navigationseinrichtung (320) geeignet sind zum Vergleichen der bestimmten Werte der Lagewinkel; und wobei
wenn die bestimmten Lagewinkelmesswerte um weniger als den vorgegebenen Lagewinkeltoleranzwert voneinander abweichen,
dann die erste Navigationseinrichtung (310) geeignet ist zum Re-initialisieren mit den von der zweiten Navigationseinrichtung (320) bestimmten Lage- und Kurswinkelmesswerten; und
dann die zweite Navigationseinrichtung (320) geeignet ist zum Navigieren anhand der von der zweiten Navigationseinrichtung (320) bestimmten Lage- und Kurswinkel.

11. Vorrichtung (300) nach einem der Ansprüche 8 bis 10, wobei
die erste Navigationseinrichtung (310) eine erste Navigationsplattform aufweist; und
die zweite Navigationseinrichtung (320) eine hybride Navigationsplattform aufweist, mit einer zweiten Navigationsplattform (322), einem Satellitennavigationssystem (324) und einem Kalmanfilter (326), das die Daten der zweiten Navigationsplattform (322) und des Satellitennavigationssystems (324) koppelt.

## Claims

1. A method for determining navigation data, comprising:
determining (S400) positional angle measurement values with a first inertial navigation device (310); and
initializing a second hybrid navigation device (320) with the positional angle measurement values determined by the first navigation device (310), wherein
rotation rate and acceleration measurement values for the determining of the positional angle measurement values are supplied to the first navigation device (310) and the second navigation device (320) from a sensor unit (330); wherein
erroneous measurements of the positional angle measurement values determined by the first navigation device (310) occur with a probability that is smaller than a predetermined positional angle error rate;
erroneous measurements of the positional angle measurement values determined by the second navigation device (320) occur with a probability that is larger than the predetermined positional angle error rate; and
an erroneous measurement of the positional angle measurement values is present, if one of the determined positional angle measurement values deviates by more than a predetermined positional angle tolerance value from a respective positional angle reference value.

2. The method according to claim 1, further comprising:
determining (S410) a track angle measurement value simultaneously to determining the positional angle measurement value,
initializing (S420) the second navigation device (320) with the positional angle measurement values and the track angle measurement values determined by the first navigation device (310), wherein
erroneous measurements of the track angle measurement value occur with a probability that is smaller than a predetermined track angle error rate; and
an erroneous measurement of the track angle measurement value occurs, if the determined track angle measurement value deviates by more than a predetermined track angle tolerance value from a respective track angle reference value.

3. The method according to claim 2, wherein the track angle measurement value is determined by the first navigation device (310), by a magnetic sensor or by a manual input.

4. The method according to one of the preceding claims, further comprising:
determining (S430) positional and track angle measurement values with the second navigation device (320) temporarily after initializing the second navigation device (320) with the positional angle measurement values determined by the first navigation device (310);
determining (S440) of positional angle measurement values with the first navigation device (310) during determining track and positional angle measurement values with the second navigation device (320);
comparing (S450) the positional angle measurement values determined by the first navigation device (310) and the second navigation device (320), wherein
(S460) if the determined positional angle measurement values deviate from each other by less than the predetermined positional angle tolerance value,
then, re-initialization (S470) of the first navigation device (310) with the positional and track angle measurement values determined by the second navigation device (320); and
then, navigating (S480) based on the positional and track angle measurement values determined by the second navigation device (320).

5. The method according to one of the preceding claims, wherein
the first navigation device (310) comprises a first navigation platform; and
the second navigation device (320) comprises a second navigation platform (322), a satellite navigation system (324), and a Kalman filter (326), which couples the data of the second navigation platform (322) and the satellite navigation system (324).

6. The method according to claim 5, wherein the first navigation platform and the second navigation platform (322) are the same.

7. The method according to one of the preceding claims, wherein the first and the second navigation devices (310, 320) as well as the sensor unit (330) are not accelerated during determining of the angles for the first time, or the first and the second navigation devices (310, 320) as well as the sensor unit (330) are accelerated during determining of the angles for the first time such that the accelerations cancel in the temporal mean.

8. A device (300) for determining navigation data, comprising:
a first inertial navigation device (310) for determining positional angle measurement values;
a second hybrid navigation device (320) for determining positional angle measurement values, the second navigation device (320) being initialized with positional angle measurement values determined by the first navigation device (310); and
a sensor unit (330) that is configured to supply rotation rate and acceleration measurement values for the determining of the positional angle measurement values to the first navigation device (310) and the second navigation device (320), wherein
erroneous measurements of the positional angle measurement values determined by the first navigation device (310) occur with a probability that is smaller than a predetermined positional angle error rate;
erroneous measurements of the positional angle measurement values determined by the second navigation device (320) occur with a probability that is larger than a predetermined positional angle error rate; and wherein
an erroneous measurement of the positional angle measurement values is present, if one of the determined positional angle measurement values deviates by more than a predetermined positional angle tolerance value from a respective positional angle reference value.

9. The device (300) according to claim 8, wherein
the first navigation device (310) is configured to determine a track angle measurement value temporarily after determining the positional angle measurement value;
the second navigation device (320) is configured to be initialized with the angular measurement values determined by the first navigation device;
erroneous measurements of the track angle measurement value occur with a probability that is smaller than a predetermined track angle error rate; and
erroneous measurements of the track angle measurement value are present if the determined track angle measurement value deviates by more than a predetermined track angle tolerance value from a respective track angle reference value.

10. The device (300) according to anyone of claims 8 or 9, wherein
the second navigation device (320) is configured to determine positional angle and track angle measurement values temporarily after initializing the second navigation device (320) with the positional angle measurement values determined by the first navigation device (310);
the first navigation device (310) is configured to determine the positional angles during determining the positional angles and the track angle with the second navigation device (320);
the first navigation device (310) and the second navigation device (320) are configured to compare the determined values of the positional angles; and wherein
if the determined positional angle measurement values deviate by less than the predetermined positional angle tolerance value from each other,
then, the first navigation device (310) is configured to be re-initialized with the positional and track angle measurement values determined by the second navigation device (320); and
then, the second navigation device (320) is configured to navigate based on the positional and track angle measurement values determined by the second navigation device (320).

11. The device (300) according to anyone of claims 8 to 10, wherein
the first navigation device (310) comprises a first navigation platform; and
the second navigation device (320) comprises a hybrid navigation platform with a second navigation platform (322), a satellite navigation system (324) and a Kalman filter (326), which couples the data of the second navigation platform (322) and the satellite navigation system (324).

## Revendications

1. Procédé pour déterminer des données de navigation, comportant :
la détermination (S400) de valeurs de mesure d'angle de position avec un premier dispositif de navigation (310), inertiel ; et
l'initialisation d'un deuxième dispositif de navigation (320), hybride, avec les valeurs de mesure d'angle de position définies par le premier dispositif de navigation (310), dans lequel
on fournit le premier dispositif de navigation (310) et le deuxième dispositif de navigation (320) en valeurs de mesure de vitesse de rotation et d'accélération par une unité de capteur (330) pour la détermination de valeurs de mesure d'angle de position ; dans lequel
des erreurs de mesure des valeurs de mesure d'angle de position définies par le premier dispositif de navigation (310) apparaissent avec une probabilité qui est inférieure à un taux d'erreur d'angle de position prédéfini ; et
des erreurs de mesure des valeurs de mesure d'angle de position définies par le deuxième dispositif de navigation (320) apparaissent avec une probabilité qui est supérieure au taux d'erreur d'angle de position prédéfini ; et
il y a une erreur de mesure des valeurs de mesure d'angle de position si l'une des valeurs de mesure d'angle de position définies s'écarte de plus d'une valeur de tolérance d'angle de position prédéfinie d'une valeur de référence d'angle de position correspondante.

2. Procédé selon la revendication 1, comportant également :
la détermination (S410) d'une valeur de mesure d'angle de route temporellement en même temps que la détermination des valeurs de mesure d'angle de position,
l'initialisation (S420) du deuxième dispositif de navigation (320) avec les valeurs de mesure d'angle de position définies par le premier dispositif de navigation (310) et la valeur de mesure d'angle de route, dans lequel
des erreurs de mesure de la valeur de mesure d'angle de route apparaissent avec une probabilité qui est inférieure à un taux d'erreur d'angle de route prédéfini ; et
il y a une erreur de mesure des valeurs de mesure d'angle de route si la valeur de mesure d'angle de route définie s'écarte de plus d'une valeur de tolérance d'angle de route prédéfinie d'une valeur de référence d'angle de route correspondante.

3. Procédé selon la revendication 2, dans lequel la valeur de mesure d'angle de route est définie avec le premier dispositif de navigation (310), avec un capteur magnétique ou avec une entrée manuelle.

4. Procédé selon l'une des revendications précédentes, comportant également :
la détermination (S430) de valeurs de mesure d'angle de position et de route avec le deuxième dispositif de navigation (320) temporellement après l'initialisation du deuxième dispositif de navigation (320) avec les valeurs de mesure d'angle de position définies par le premier dispositif de navigation (310) ;
la détermination (S440) de valeurs de mesure d'angle de position avec le premier dispositif de navigation (310) pendant la détermination des valeurs de mesure d'angle de position et de route avec le deuxième dispositif de navigation (320) ;
la comparaison (S450) des valeurs de mesure d'angle de position définies par le premier dispositif de navigation (310) et le deuxième dispositif de navigation (320), dans lequel
(S460)
si les valeurs de mesure d'angle de position définies s'écartent les unes des autres de moins de la valeur de tolérance d'angle de position prédéfini,
alors réinitialisation (S470) du premier dispositif de navigation (310) avec les valeurs de mesure d'angle de position et de route définies par le deuxième dispositif de navigation (320) ; et
alors navigation (S480) à l'aide des valeurs de mesure d'angle de position et de route définies par le deuxième dispositif de navigation (320).

5. Procédé selon l'une des revendications précédentes, dans lequel
le premier dispositif de navigation (310) comporte une première plate-forme de navigation ; et
le deuxième dispositif de navigation (320) comporte une deuxième plate-forme de navigation (322), un système de navigation par satellite (324) et un filtre de Kalman (326) qui couple les données de la deuxième plate-forme de navigation (322) et du système de navigation par satellite (324).

6. Procédé selon la revendication 5, dans lequel la première plate-forme de navigation et la deuxième plate-forme de navigation (322) sont les mêmes.

7. Procédé selon l'une des revendications précédentes, dans lequel les premier et deuxième dispositifs de navigation (310, 320) ainsi que l'unité de capteur (330), lors de la première détermination d'angles, ne sont pas accélérés, ou les premier et deuxième dispositifs de navigation (310, 320) ainsi que l'unité de capteur (330), lors de la première détermination d'angles, sont accélérés de telle sorte que les accélérations s'annulent dans la moyenne temporelle.

8. Dispositif (300) pour déterminer des données de navigation, avec :
un premier dispositif de navigation (310), inertiel, adapté pour déterminer des valeurs de mesure d'angle de position ;
un deuxième dispositif de navigation (320), hybride, adapté pour déterminer des valeurs de mesure d'angle de position qui sont initialisées avec les valeurs de mesure d'angle de position définies par le premier dispositif de navigation (310) ; et avec
une unité de capteur (330) qui est installée pour fournir le premier dispositif de navigation (310) et le deuxième dispositif de navigation (320) en valeurs de mesure de vitesse de rotation et d'accélération pour la détermination de valeurs de mesure d'angle de position, dans lequel
des erreurs de mesure des valeurs de mesure d'angle de position définies par le premier dispositif de navigation (310) apparaissent avec une probabilité qui est inférieure à un taux d'erreur d'angle de position prédéfini ; et
des erreurs de mesure des valeurs de mesure d'angle de position définies par le deuxième dispositif de navigation (320) apparaissent avec une probabilité qui est supérieure au taux d'erreur d'angle de position prédéfini ; et dans lequel
il y a une erreur de mesure des valeurs de mesure d'angle de position si l'une des valeurs de mesure d'angle de position définies s'écarte de plus d'une valeur de tolérance d'angle de position prédéfinie d'une valeur de référence d'angle de position correspondante.

9. Dispositif (300) selon la revendication 8, dans lequel
le premier dispositif de navigation (310) est adapté pour déterminer une valeur de mesure d'angle de route temporellement après la détermination des valeurs de mesure d'angle de position,
le deuxième dispositif de navigation (320) est adapté pour l'initialisation avec les valeurs de mesure d'angle définies par le premier dispositif de navigation ;
des erreurs de mesure de la valeur de mesure d'angle de route apparaissent avec une probabilité qui est inférieure à un taux d'erreur d'angle de route prédéfini ; et
il y a une erreur de mesure des valeurs de mesure d'angle de route si la valeur de mesure d'angle de route définie s'écarte de plus d'une valeur de tolérance d'angle de route prédéfinie d'une valeur de référence d'angle de route correspondante.

10. Dispositif (300) selon l'une des revendications 8 ou 9, dans lequel
le deuxième dispositif de navigation (320) est adapté pour déterminer des valeurs de mesure d'angle de position et de route temporellement après l'initialisation du deuxième dispositif de navigation (320) avec les valeurs de mesure d'angle de position définies par le premier dispositif de navigation (310) ;
le premier dispositif de navigation (310) est adapté pour déterminer les angles de position pendant la détermination d'angles de position et de route avec le deuxième dispositif de navigation (320) ;
le premier dispositif de navigation (310) et le deuxième dispositif de navigation (320) sont adaptés pour la comparaison des valeurs définies des angles de position ; et dans lequel
si les valeurs de mesure d'angle de position définies s'écartent les unes des autres de moins de la valeur de tolérance d'angle de position prédéfini,
alors le premier dispositif de navigation (310) est adapté pour la réinitialisation avec les valeurs de mesure d'angle de position et de route définies par le deuxième dispositif de navigation (320) ; et
alors le deuxième dispositif de navigation (320) est adapté pour naviguer à l'aide des angles de position et de route définis par le deuxième dispositif de navigation (320).

11. Dispositif (300) selon l'une des revendications 8 à 10, dans lequel
le premier dispositif de navigation (310) comporte une première plate-forme de navigation ; et
le deuxième dispositif de navigation (320) comporte une plate-forme de navigation hybride, avec une deuxième plate-forme de navigation (322), un système de navigation par satellite (324) et un filtre de Kalman (326) qui couple les données de la deuxième plate-forme de navigation (322) et du système de navigation par satellite (324).
